# EUROPÄISCHE PATENTSCHRIFT

(11) **EP 1 552 235 B1**
(45) Veröffentlichungstag und Bekanntmachung des Hinweises auf die Patenterteilung: **23.08.2006**
(21) Anmeldenummer: 03788952.4
(22) Anmeldetag: 14.10.2003
(51) Int. Cl.: F28D 3/00

(54) **VERFAHREN ZUR GEWINNUNG EINER GASFÖRMIGEN PHASE AUS EINEM FLÜSSIGEN MEDIUM UND VORRICHTUNG ZU SEINER DURCHFÜHRUNG**
METHOD FOR OBTAINING A GASEOUS PHASE FROM A LIQUID MEDIUM AND DEVICE FOR CARRYING OUT THE SAME
PROCEDE DE RECUPERATION D'UNE PHASE GAZEUSE CONTENUE DANS UN MILIEU LIQUIDE ET DISPOSITIF PERMETTANT LA MISE EN OEUVRE DUDIT PROCEDE

(30) Priorität: 17.10.2002 DE 10248599
(43) Veröffentlichungstag der Anmeldung: 13.07.2005
(73) Patentinhaber: Uhde GmbH, 44141 Dortmund (DE); Degussa AG, 40474 Düsseldorf (DE)
(72) Erfinder: KLEMM, Elias, 90408 Nürnberg (DE); ALBRECHT, Johannes, 61206 Wöllstadt (DE); LANGE DE OLIVEIRA, Armin, 63450 Hanau (DE); MARKOWZ, Georg, 63791 Karlstein (DE); GROSS, Stefan, 63505 Langenselbold (DE); SCHÜTTE, Rüdiger, 63755 Alzenau (DE); EHRLICH, Johannes, 63755 Alzenau (DE); SCHIRRMEISTER, Steffen, 45472 Mülheim an der Ruhr (DE); VON MORSTEIN, Olaf, 45147 Essen (DE)
(86) Internationale Anmeldenummer: PCT/EP2003/011328
(87) Internationale Veröffentlichungsnummer: WO 2004/036137

(56) Entgegenhaltungen:
- EP-A- 0 878 442
- WO-A-03/076065
- DE-A- 10 162 801
- DE-A- 19 541 265
- US-A- 4 706 741
- US-B1- 6 220 497

## Beschreibung

Die Erfindung richtet sich auf ein Verfahren zur Gewinnung einer gasförmigen Phase aus einem flüssigen Medium durch mindestens teilweises Verdampfen des flüssigen Mediums oder mindestens einer darin enthaltenen Komponente öder Freisetzen einer durch Spaltung gebildeten Komponente. Das Verfahren wird in einem modular aufgebauten Fallfilmverdampfer, der stapelförmig vertikal oder geneigt angeordnete plattenförmige Module und spaltförmige Verdampferräume zwischen jeweils zwei Modulen umfasst, durchgeführt.

Bei der erfindungsgemäß zu verwendenden Vorrichtung handelt es sich um einen Reaktor, welcher im technischen Maßstab, insbesondere im tons-Maßstab, betrieben werden kann.

Fallfilmverdampfer, welche als horizontale oder vertikale Rohrbündel oder auch als vertikale Plattenstapel ausgeführt sein können, werden in der chemischen Industrie in vielseitiger Weise eingesetzt. Der Vorteil von Fallfilmverdampfern gegenüber üblichen Zwangsumlauf- oder Naturumlaufverdampfern ist die geringe Überhitzung der Flüssigkeit. Während bei den Fallfilmverdampfern der Flüssigkeitsfilm ausschließlich durch die Schwerkraft über eine Oberfläche fließt - beispielhaft wird auf das US-Patent 5,203,406 verwiesen - werden bei besonders thermolabilen Substanzen Dünnschichtverdampfer eingesetzt, bei welchen mittels mechanischer Mittel auf einer Verdampferoberfläche ein dünner Film erzeugt, und durch Turbulenzen im Film der Stoff- und Wärmeübergang verbessert werden - beispielhaft wird auf das US-Patent 6,173,762 verwiesen. Beispiele für Anwendungen von Fallfilmverdampfern sind: Entfernen organischer Lösungsmittel aus Lösungen, um darin gelöste thermolabile Produkte anzureichern und das Lösemittel zurückzugewinnen; Aufkonzentrieren von Fruchtsäften (Lebensmittelchemie); Gewinnung von Süsswasser aus Salz- oder Brackwasser.

Der Fallfilmverdampfer gemäß US-Patent 5,203,406 umfasst ein Paket von im wesentlichen vertikal in einem bestimmten Abstand voneinander angeordneten Wärmeaustauscherplatten, wobei jeder zweite Zwischenraum zwischen den Platten als Verdampferraum ausgebildet ist. Hinweise, wonach die Verdampferplatten strukturiert sind, lassen sich diesem Dokument nicht entnehmen.

Aus dem US-Patent 6,173,762 B1 ist bekannt, zur Verbesserung des Wärme- und Stoffübergangs die filmtragende Oberfläche eines Wärmeaustauscherrohres für einen Fallfilmverdampfer mit Rippen und Rillen zu strukturieren. Die Höhe der Rippen wird mit 0,2 bis 0,8 mm angegeben, die Anzahl Rippen mit 900 bis 1100/m.

In üblichen Fallfilmverdampfern dürfen minimale Werte der Berieselüngsdichte und der Filmdicke, um 1 mm bei Fallfilmverdampfern und 0,5 mm bei Dünnschichtverdampfern nicht unterschritten werden, weil es sonst zu Filmabrissen, zum Trockenlaufen und zu unerwünschten "hot-spots" und damit bei der Konzentrierung eines flüssigen Mediums, welches eine thermolabile Komponente enthält, zu unerwünschten Zersetzungserscheinungen kommen kann.

Einen modular aufgebauten Mikroreaktor zur Durchführung von Reaktionen zwischen einem flüssigen und einem gasförmigen Reaktionspartner lehrt die DE 100 36 602 A1. Dieser Mikroreaktor umfasst einen Stapel aus einer beliebigen Anzahl von vertikal oder geneigt angeordneten Fluidführungsplatten, einer gleichen Anzahl Zwischenplatten und zwischen je zwei Platten spaltförmigen Reaktionsräumen. Die Fluidführungsplatten weisen parallel angeordnete Mikrokanäle auf, in welchen eine Flüssigkeit durch Schwerkraft und/oder Kapillarkräfte in ununterbrochenen Kapillarfäden fließen und mit einem Gas in Kontakt treten und reagieren kann. Die Fluidführungsplatte kann mit einem Katalysator beschichtet sein und an ihrer Rückwand mit einem Wärmetauschermedium in Kontakt stehen. Das entstehende flüssige Reaktionsgemisch wird am unteren Ende der Fluidführungsplatten über Sammelkanäle abgeleitet. Nachteilig an dem Mikroreaktor gemäß DE 100 36 602 A1 ist der durch viele Zu- und Ableitungen, Sammel- und Verteilerkanäle, Druckverlustbarrieren und spezielle Rampen bedingte sehr komplizierte technische Aufbau. Durch den modularen Aufbau kann zwar die Durchsatzmenge in gewissem Umfang gesteigert werden, jedoch lassen sich diesem Dokument keine Anregungen entnehmen, wie das miniaturisierte Reaktionssystem verändert werden muss, um es im technischen Maßstab und insbesondere für großtechnische Einsatzzwecke in wirtschaftlicher Weise einsatzfähig zu machen. Anregungen, den Mikroreaktor als Verdampfer zu verwenden, lassen sich dem Dokument nicht entnehmen.

Aus der WO 02/18042 A1 ist ein weiterer Reaktor zum Durchführen von Reaktionen zwischen mindestens zwei fluiden Reaktanden im technischen Maßstab bekannt. Der Reaktor umfasst einen Stapel aus im wesentlichen quaderförmigen, vertikal angeordneten Wandelementen mit integrierter Kühlvorrichtung und spaltförmigen Reaktionsräumen zwischen den Wandelementen. Die Wandelemente können zwar strukturiert und mit einem Katalysator belegt sein, jedoch finden sich in diesem Dokument keine Hinweise, wonach die Struktur aus einer Schar paralleler Mikrokanäle bestehen und der Reaktor als Verdampfer verwendet werden könnte.

Die DD-Patentschrift 246 257 lehrt eine verfahrenstechnische Mikroapparatur, die aus einem Stapel aus einzelnen Substratplättchen mit eingearbeiteten Vertiefungen besteht, wobei die Substratplättchen zur Bildung geschlossener kanalförmiger Hohlräume abgedeckt sind. Dieser Mikroreaktor enthält kanalförmige Reaktionsräume, in welchen außer einer chemischen Reaktion auch Verdampfungsprozesse durchgeführt werden können. Ein derartiger Mikroreaktor eignet sich als Reaktionsgefäß zur Anwendung in der chemischen mikroanalytik, jedoch nicht zur Verwendung als Verdampfer im Rahmen eines Prozesses in technischem (tons) Maßstab.

Aus der DE-Offenlegungsschrift 1 667 241 ist ein Reaktor für chemische Reaktionen bekannt, welcher einen Stapel aus plattenförmigen, gegebenenfalls mit einem Katalysator beschichteten Modulen und zwischen diesen angeordneten spaltförmigen Reaktionsräumen, Abstandshaltevorrichtungen zur Begrenzung der Reaktionsräume und Einlass- und Auslassvorrichtungen in diese Räume umfasst. Der Flächenabstand zwischen den Platten liegt im Bereich von 0,001 und 6,3 mm, so dass der wirksame Reaktionsraum gegenüber Mikroreaktoren vergrößert sein kann. Die Oberfläche der Platten auf welchen ein Flüssigkeitsfilm zweckmäßigerweise unter Zentrifugalkraft fließt, kann zwar geätzt sein, Hinweise auf die Anwesenheit parallel angeordneter Mikrokanäle lassen sich dem Dokument jedoch nicht entnehmen. Der Plattenstapel kann zwar insgesamt temperiert werden, Vorrichtungen zum Temperieren einzelner Platten sind jedoch nicht vorgesehen, so dass sich diese Vorrichtung nicht unmittelbar zur Verwendung in einem großtechnischen Prozess eignet.

Der Reaktor gemäß US-Patent 5,811,062 umfasst mehrere vertikal übereinander angeordnete Laminate mit darin angeordneten Mirkostrukturelementen, wie insbesondere Mikrokanälen. Durch zusammenschaltung vieler derartiger Mikroreaktoren lassen sich auch Reaktionen im Makromaßstab durchführen. Die Abmessungen der Mikrokomponenten liegen im Bereich von etwa 1 µm bis 1 cm. Die Breite der Rinnen in den Laminaten, woraus durch Abdeckung die Kanäle gebildet werden, wird mit 1 µm bis 1 mm angegeben; sofern oberhalb der Rinnen überhaupt ein Spalt verbleibt, soll die Spaltweite weniger als 100 µm, insbesondere weniger als 10 µm betragen. Zwar kann der Reaktor auch als Verdampfer verwendet werden, jedoch findet sich in diesem Dokument keine Anregung die Laminate mit den Mikrostrukturen, also den Reaktionskanälen in anderer Weise als vertikal anzuordnen. Der Reaktor wird nicht als Fallfilmverdampfer verwendet. Nachteilig an diesem Reaktor ist ferner, dass durch die Dimensionierung der Rinnen, selbst wenn sich über diesen noch einen geringer Spalt befindet, einer Verdampfung der in Rinnen fließenden Flüssigkeit enge Grenzen setzt.

Das EP-Patent 0 688 242 lehrt eine integrale Struktur für die chemische Verarbeitung und Produktion, die eine Vielzahl von miteinander verbundenen Plättchen mindestens einen dreidimensional gewundenen durchgehenden Kanal zwischen benachbarten Plättchen sowie mindestens eine Einlass- und eine Auslassöffnung für die umzusendenden Stoffe umfasst. Dieser modular aufgebaute Mikroreaktor kann ferner zwischen benachbarten Plättchen Kanäle zum Durchleiten eines Wärmeträgermediums aufweisen. Auch dieser Mikroreaktor lässt sich nicht durch Parallelschaltung vieler Reaktoren und/oder Vergrößerung der Plattenzahl innerhalb eines Stapels beliebig vergrößern, um ein Verfahren in großtechnischem Maßstab durchführen zu können. Anregungen diesen Mikroreaktor so umzugestalten, dass er als Fallfilmreaktor Anwendung finden kann, sind diesem Dokument nicht zu entnehmen.

Aufgabe der vorliegenden Erfindung ist es demgemäß, ein verbessertes Verfahren zur Gewinnung einer gasförmigen Phase aus einem flüssigen Medium unter Verwendung eines modular aufgebauten Fallfilmverdampfers, welcher stapelförmig vertikal oder geneigt angeordnete plattenförmige Module und spaltförmige Verdampferräume zwischen den Modulen enthält, aufzuzeigen, wobei ein wesentlicher Aspekt der Verbesserung darin liegt, dass das Verfahren im technischen Maßstab (= tons-maßgtab) in einfacher und wirtschaftlicher Weise durchgeführt werden kann.

Eine weitere Aufgabe der Erfindung richtet sich darauf, ein flüssiges Medium, welches eine thermolabile Komponente enthält, ohne nennenswerte Zersetzung und insbesondere ohne das Risiko einer unkontrollierten Zersetzung zu konzentrieren, wobei die gebildete gasförmige Phase und die flüssige konzentrierte Phase weiteren Verwendungen zugeführt werden können.

Eine weitere Aufgabe richtet darauf, ein durch Verdampfen einer Flüssigkeit gewonnenes Gas unter konstantem Druck und schnell regelbar für eine Folgereaktion mit einer zweiten Reaktionskomponente zur Verfügung zu stellen.

Eine weitere Aufgabe der Erfindung richtet sich auf die Bereitstellung einer Vorrichtung zur Durchführung des erfindungsgemäßen Verfahrens im technischem Maßstab.

Gemäß einer weiteren Aufgabe soll die Vorrichtung einen möglichst einfachen Aufbau aufweisen und zudem leicht an unterschiedliche Kapazitätsanförderungen angepasst werden können.

Gemäß einer weiteren Aufgabe sollte die erfindungsgemäße Vorrichtung selbst als Reaktor für eine weitere Umsetzung der gebildeten Gasphase und/oder der sich konzentrierenden flüssigen Phase mit einer oder mehreren weiteren Reaktionskomponenten eigenen.

Die vorgenannten Aufgaben und weitere Aufgaben, wie sie aus der nachfolgenden Beschreibung leicht herleitbar sind, werden durch die Verwendung eines Fallfilmverdampfers, welcher auf den Verdampfermodulen eine Schar paralleler Mikrokanäle in einer für einen Fallfilm geeigneten Orientierung aufweist und dessen Verdampferräume spaltförmig und oben und/oder unten geöffnet sind, gelöst.

Gefunden wurde demgemäß ein Verfahren zur Gewinnung einer gasförmigen Phase aus einem flüssigen Medium im technischen Maßstab, durch mindestens teilweises Verdampfen des flüssigen Mediums oder mindestens einer darin enthaltenen Komponente oder Freisetzen einer aus dem flüssigen Medium durch Spaltung gebildeten Komponente in einem modular aufgebauten Fallfilmverdampfer, umfassend, stapelförmig vertikal oder geneigt angeordnete plattenförmige Module, wobei mindestens jeder zweite Modul als Verdampfermodul ausgebildet ist, und spaltförmige Verdampferräume zwischen einander zugekehrten Seitenflächen Von im wesentlichen gleich großen, rechteckigen Modulen,
dadurch gekennzeichnet,
dass man einen Fallfilmverdampfer verwendet, dessen Verdampfermodule zumindest auf einer den spaltförmigen Verdampferräumen zugekehrten Seite eine Schar paralleler Mikrokanäle aufweisen, deren Orientierung der Laufrichtung des darin durch Schwerkraft und/oder Kapillarkräfte fließenden flüssigen Mediums entspricht, und dessen Verdampferräume oben und/oder unten über im wesentlichen die gesamte Breite der Module offen sind, das flüssige Medium mittels einer Aufgabevorrichtung den Mikrokanälen zuführt, die Mikrokanäle mittels eines die Verdampfermodule durchströmenden Wärmeträgermediums indirekt beheizt und die entstehende gasförmige Phase aus den oben und/oder unten offenen verdampferräumen abzieht.

Die Unteransprüche richten sich auf bevorzugte Ausführungsformen des Verfahrens.

Bei dem flüssigen Medium, welches der jeweiligen Schar paralleler Mikrokanäle zugeführt wird, kann es sich um einen reinen Stoff oder um ein Stoffgemisch, beispielsweise eine Lösung einer oder mehrerer Komponenten in einem Lösungsmittel, handeln. Der Begriff "flüssige Medium" schließt Schmelzen ein. Unter den Verfahrensbedingungen, welche sich bezüglich Temperatur und Druck im wesentlichen nach den Stoffeigenschaften des flüssigen Mediums richten, wird durch mindestens teilweises Verdampfen einer Komponente des flüssigen Mediums oder durch gezielte thermische Spaltung einer darin enthaltenen Komponente eine gasförmige Phase gebildet. Der Begriff "gasförmige Phase" umfasst auch Dämpfe und Nebel.

Überraschender Weise lässt sich ein erfindungsgemäßer Reaktor, der analog dem Mikroreaktor gemäß DE 100 36 602 A1 eine Fluidführungsplatte und spaltförmige Reäktionsräume enthält, die Spalten jedoch oben und/oder unten über im wesentlichen die gesamte Breite der Platten offen sind, zur Verdampfung eines flüssigen Mediums verwenden. Das genannte Dokument gibt diesbezüglich keinerlei Anregung. Durch die nachfolgend weiter erörterten Besonderheiten des erfindungsgemäß zu verwendenden Fallfilmverdampfers lässt sich das Verfahren im technischen Maßstab realisieren.

Die Begriffe Fallfilmverdampfer, Verdampfermodule und Verdampferräume werden in der vorliegenden Erfindung verwendet, obgleich es sich nicht in allen Fällen um eine Verdampfung des flüssigen Mediums oder einer darin enthaltenen Komponente handelt, sondern auch um die Freisetzung einer durch gezielte Spaltung gebildeten Komponente handeln kann. Zudem wird der Begriff Fallfilmverdampfer verwendet, obgleich es sich bei dem über die Verdampfermödule fließenden Flüssigkeit nicht um einen flächigen Film, sondern um parallel nebeneinander fließende ununterbrochene Kapillarfäden handelt. Durch die Strukturierung der Verdampferoberfläche mit einer Schar offener paralleler Mikrokanäle ist es möglich, die Berieselungsdichte und Dicke der Kapillarfäden gegenüber den Werten eines Films in konventionellen Fallfilmverdampfern abzusenken und dadurch die Stoff- und Wärmeübergangskoeffizienten signifikant zu erhöhen, ohne dass es zum Abreißen der Kapillarfäden, zum Trockenlaufen derselben oder zu unerwünschten Hot-Spots kommt.

Bei dem erfindungsgemäß zu verwendenden Fallfilmverdampfer handelt es sich um einen modular aufgebauten Fallfilmverdampfer, der plattenförmige Verdampfermodule enthält und somit leicht und mit geringem technischen Aufwand an eine gewünschte Verdampferkapazität angepasst werden kann. Im Prinzip lässt sich das erfindungsgemäße Verfahren auch in einem Fallfilmverdampfer durchführen, der als Module mehrere konzentrisch ineinander gestellte Rohre umfasst, wobei mindestens ein Teil der Ringspalte zwischen den Rohren als Verdampferräume ausgebildet sind und mindestens eine Rohrwandung dieser Verdampferräume eine Schar paralleler Mikrokanäle aufweist. Ein derartiger modular aufgebauter rohrförmiger Fallfilmverdampfer ist jedoch technisch aufwendiger als ein plattenförmiger Verdampfer und zudem lässt er sich nicht in ebenso einfacher Weise vergrößern, wie der dem erfindungsgemäß zu verwendende modular aufgebaute Fallfilmverdampfer mit stapelförmig angeordneten plattenförmigen Modulen.

Die im erfindungsgemäßen Verfahren gebildete gasförmige Phase kann aus den Verdampferräumen abgezogen und außerhalb derselben einer weiteren Verwendung zugeführt werden. Alternativ hierzu kann die gewonnene gasförmige Phase unmittelbar in den Verdampferräumen mit einer diesen zugeführten zweiten gasförmigen Reaktionskomponente in Gegenwart oder in Anwesenheit eines Katalysators auf mindestens einem Teil der die Verdampferräume begrenzenden Flächen weiter umgesetzt werden. Der zweite gasförmige Reaktionspartner kann hierbei im Gleich- oder im Gegenstrom zur Laufrichtung des flüssigen Mediums in die Verdampferräume eingeleitet werden. Sofern die Umsetzung des in-situ gebildeten Gases mit dem eingeleiteten zweiten Reaktionspartner heterogen katalysiert wird, ist es vorteilhaft, wenn die den Verdampferseiten gegenüberliegenden Seiten der Verdampferräume mit einem wirksamen Katalysator beschichtet sind.

Gemäß einer weiteren Ausführungsform wird die in den Verdämpferräumen gebildete gasförmige Phase mittels eines von unten oder oben in die Verdampferräume eingeleiteten inerten oder reaktiven Gases als solches oder teilweise umgesetztes Gas aus den Verdampferräumen ausgetragen. Sofern in den Verelampferräumen bereits eine chemische Reaktion durchgeführt wird, handelt es sich bei den Verdampferräumen gleichzeitig auch um Reaktiärisräume.

Das Gemisch aus der gewonnenen Gasphase mit dem Inertgas oder einem Reaktiönsgas kann zum Beispiel in einem nachgeschalteten Reaktor, insbesondere einem modularen plattenförmigen Reaktor umgesetzt werden.

Das Volumen des in die Mikrokanäle eingespeisten flüssigen Mediums nimmt während des Durchfließens der Mikrokanäle im allgemeinen ab. Lediglich wenn das sich konzentrierende flüssige Medium mit einem in die Verdampferräume geleiteten weiteren gasförmigen Reaktionspartner weiter umgesetzt wird, kann das Volumen im wesentlichen konstant bleiben, oder größer werden. Das aus den Mikrokanälen abfließende flüssige Medium wird entweder unmittelbar in einem unter den Verdampferräumen angeordneten Behälter gesammelt oder mittels einer Ablaufrinne aus dem Fallfilmverdampfer abgezogen.

Das erfindungsgemäße Verfahren eignet sich in besonderer Weise zur Konzentrierung eines solchen flüssigen Mediums, das eine oder mehrere thermolabile Verbindungen enthält. Die eine oder mehreren thermolabilen Stoffe können sowohl in der sich konzentrierenden flüssigen Phase oder/und in der durch Verdampfen gebildeten Gas- bzw. Dampfphase enthalten sein. Zum Zwecke der Konzentrierung eines derartigen Mediums kann es besonders vorteilhaft sein, wenn der zu verwendende Fallfilmverdampfer mehrere Stapel aus vertikal angeordneten Modulen und dazwischen liegenden spaltförmigen Verdampferräumen mit mindestens einer Schar paralleler Mikrokanäle in jedem Verdampferraum umfasst. Zweckmäßigerweise sind die Stapel übereinander angeordnet und die spaltförmigen Räume zwischen den Modulen über im wesentlichen die gesamt Breite der Module oben und unten offen, so dass diese im wesentlichen frei und ohne nennenswerten Druckverlust von einem Gas durchströmt werden können und zusätzlich die aus einem oberen Stapel aus den Mikrokanälen ablaufende Flüssigkeit den Mikrokanälen des darunter liegenden Stapels zugeführt werden kann.

Alternativ oder in Ergänzung zur Verwendung eines Fallfilmverdampfer aus mehreren Stapeln kann auch ein Stapel derart ausgebildet sein, dass die Verdampfermodule in mehrere horizontal angeordnete Zonen gegliedert sind. Die einzelnen Stapel, beziehungsweise die einzelnen Zonen der Verdampfermodule eines Stapels können derart betrieben werden, dass durch die Verwendung von Wärmeträgermedien unterschiedlicher Temperatur die einzelnen Stapel beziehungsweise die einzelnen Zonen mit unterschiedlicher Temperatur betrieben werden können. So ist es bei der Konzentrierung eines eine thermolabile Komponente enthaltenden flüssigen Mediums besonders vorteilhaft, einen ersten Stapel oder eine erste Zone zur Konzentrierung zu verwenden und einen nachgeschalteten Stapel oder eine nachgeschaltete Zone zum Abkühlen des gebildeten Konzentrats zu verwenden. In den als Verdampferräume definierten Räumen des erfindungsgemäß zu verwendenden Fallfilmverdampfers können somit, obgleich der Begriff Verdampferraum beibehalten wurde, auch flüssige Medien abgekühlt werden.

Das erfindungsgemäße Verfahren sowie der dafür zu verwendende Fallfilmverdampfer werden anhand der nachfolgenden Figuren weiter beschrieben:
Figur 1 zeigt einen Querschnitt durch einen erfindungsgemäßen Fallfilmverdampfer mit zwei in einem Behälter angeordneten Stapeln aus Verdampfer beziehungsweise Kühlermodulen mit dazugehörigen (nicht erkennbaren) Zwischenräumen zwischen den Modulen.
Figur 2 zeigt eine Aufsicht auf einen Verdampfermodul.
Figur 3 zeigt einen Verdampfermodul im Querschnitt entlang der Linie A, A' in Figur 2.
Figur 4 zeigt einen Verdampfermodul im Querschnitt entlang der Linie B, B' in Figur 2.
Figur 5 zeigt einen erweiterten Ausschnitt aus Figur 4 (gekennzeichnet durch den Kreis), wobei in Figur 5 der entsprechende Ausschnitt von zwei nebeneinander angeordneten Verdampfermodulen gezeigt wird und Scharen paralleler Mikrokanäle erkennbar sind.

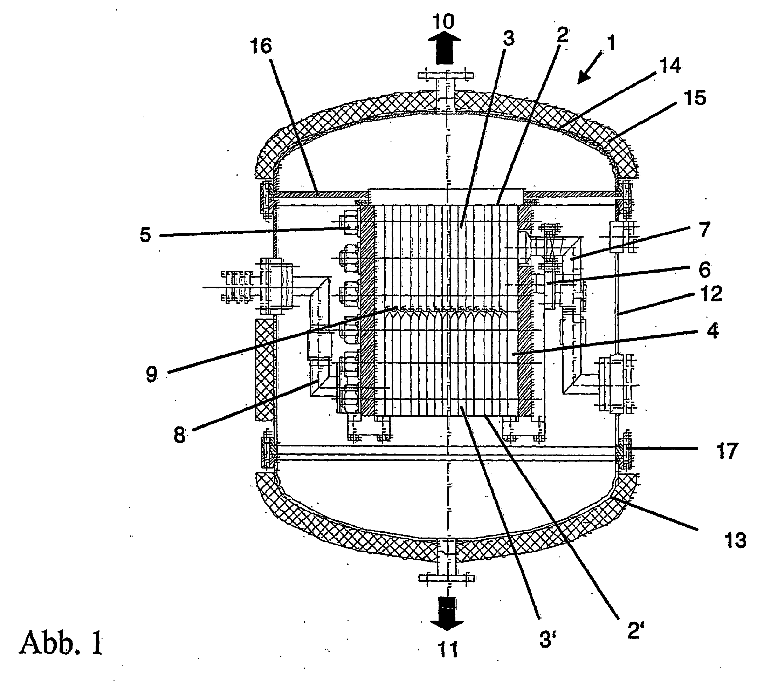

Die Bedeutung der Bezugszeichen in den Figuren 1 bis 5 ist der Bezugszeichenliste zu entnehmen.

Figur 1 zeigt eine bevorzugte Ausführungsform eines erfindungsgemäß zu verwendenden Fallfilmverdampfers (1) welcher sich in besonderer Weise zur Konzentrierung von Lösungen, welche eine thermolabile Komponente enthalten, eignet. In einem Behälter, umfassend eine Behälterseitenwand (12), einen Behälterboden (13) und einen Behälterdeckel (14), sind in dieser bevorzugten Ausführungsform unmittelbar übereinander zwei Stapel (2, 2') aus erfindungsgemäßen Verdampfermödulen (3, 3') mit dazwischen liegenden spaltförmigen Räumen, welche in Figur 1 allerdings nicht erkennbar sind, mittels einer beliebigen, in Figur 1 nicht gezeigten Haltevorrichtung fixiert. Der Behälter weist im oberen Teil einen Stutzen zum Abziehen der Gasphase (Gas, Dampf oder Nebel) (10) und im unteren Teil einen Stutzen zum Abziehen einer flüssigen Phase (11) auf. Die stapelförmig vertikal angeordneten plattenförmige Module der beiden Stapel sind unmittelbar übereinander angeordnet, so dass die Ausrichtung der Verdampferräume des oberen Stapels im wesentlichen jener des unteren Stapels entspricht. Die Zwischenräume zwischen den Modulen sind in Figur 1 nicht erkennbar, da deren Schmalseiten in dieser Ausführungsform geschlossen sind. Der Begriff "im wesentlichen über die gesamte Breite" bedeutet, dass der Spalt durch konstruktiv bedingte Schweißpunkte, Abstandhalter und dergleichen unterbrochen sein kann. Andererseits sind die spaltförmigen Räume in beiden Stapeln sowohl oben als auch unten im wesentlich über die gesamte Breite der Module offen, so dass die im erfindungsgemäßen. Verfahren gebildete gasförmige Phase rasch und ohne ein kompliziertes Rohrsystem nach unten oder nach oben entweichen kann. In der Ausführungsform gemäß Figur 1 ist zwischen den beiden Stapeln eine Vorrichtung (9) zum Einleiten eines Gases in die spaltförmigen Verdampferräume angeordnet. Durch das Einleiten eines Inertgases oder eines reaktiven Gases am unteren Ende eines Stapels wird sicher gestellt, dass die in den Verdampferräumen gebildete gasförmige Phase nur in eine Richtung entweicht, im vorliegenden Fall nach oben.

Um eine Rückvermischung der oben aus den Verdampferräumen ausgetriebenen Gasphase und Wiedereintritt in den unteren Teil des untersten Stapels zu vermeiden, wird zwischen der Behälterwand und der Oberkante des oberen Stapels ein gasdichtes Trennelement (16) angeordnet. Dieses Trennelement kann in beliebiger Weise ausgebildet sein, sofern sichergestellt wird, dass eine Rückvermischung vermieden wird. Beispielsweise ist es möglich, dass der Behälterdeckel unmittelbar auf der Außenkante des oberen Stapels und der Behälterboden unmittelbar auf der Außenkante des unteren Stapels angesetzt wird und die Außenseiten des Plattenstapels die Behälterwandung darstellen.

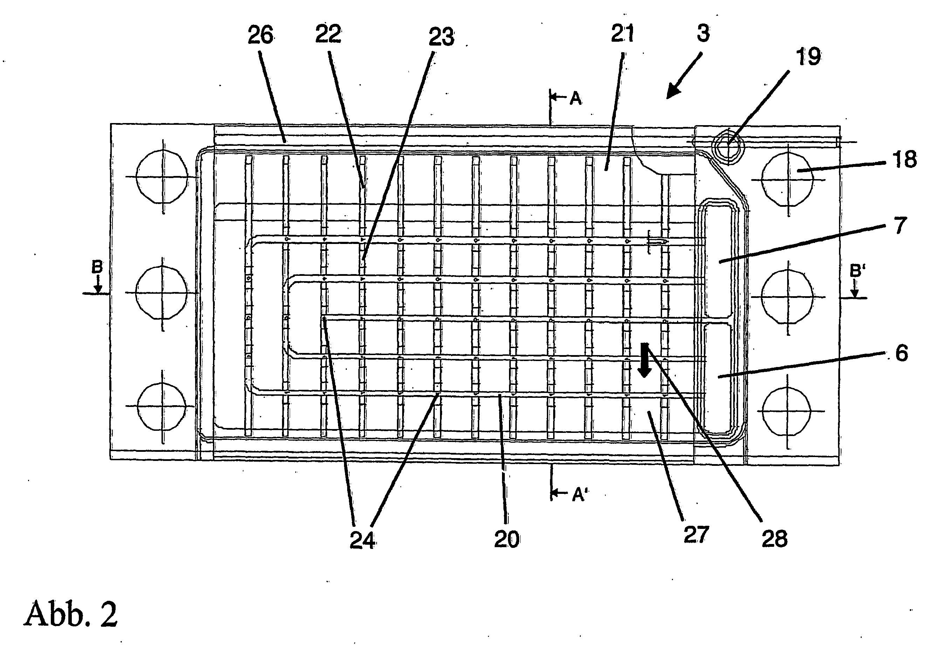

Die Plattenstapel umfassen eine Vielzahl von Verdampfermodulen (3) und dazwischen angeordnete Verdampferräume. Die Spaltweite (s) zwischen zwei Verdampfermodulen sowie die Maßhaltigkeit der Verdampferräume wird durch Abstandshalter (22) (siehe Figuren 2 bis 5) bewirkt. Zweckmäßigerweise befinden sich zu beiden Seiten der Plattenstapel Endmodule, welche als einfache Platten ausgebildet sein können. Der Plattenstapel wird mittels einer beliebigen Spannvorrichtung, in Figur 1 umfasst diese Gewindebolzen und Muttern (5), fixiert. In Figur 1 sind zusätzlich jeweils eine Leitung für den Heizmediumzulauf (6), den Heizmediumrücklauf (7) und den Zulauf eines Kühlmediums (8) für den unteren Stapel erkennbar.

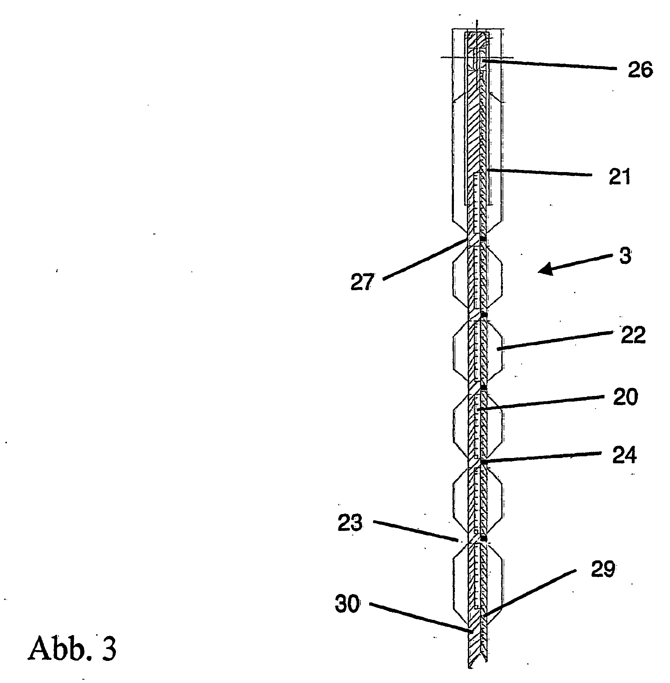

Der Aufbau eines einzelnen Verdampfermoduls mit den erforderlichen Abstandshaltern wird anhand von Figur 3 verdeutlicht: der Modul umfasst die beiden aufeinander liegenden Platten (29) und (30) mit dazwischen angeordneten Kanälen (20) für ein Wärmeträgermedium. Die Stabilität der Platten wird durch Schweißpunkte (24) und /oder Schweißnähte miteinander fixiert. Auf den Außenseiten der Platten befinden sich mehrere Abstandshalter (22); Lücken (23) zwischen den Abstandshaltern ermöglichen eine Quervermischung der Gasphase zu beiden Seiten der zweckmäßigerweise in einer vertikalen Linien angeordneten Abstandshalter. Die außen liegende Oberflächen (27) der Platten (29, 30) sind jeweils mit einer Schar paralleler Mikrokanäle ausgestattet, wobei sich diese Mikrokanäle im allgemeinen über die gesamte Plattenhöhe erstrecken. Am oberen Ende der Platten befindet sich die Zufuhrleitung (26) für das flüssige Medium mit nicht gezeigten Öffnungen, welche Bestandteil der Aufgabevorrichtung ist. Diese Leitung sowie der oberste Teil der Platten wird mittels eines Abdeckblechs (21) derart abgedeckt, dass die Flüssigkeit unmittelbar aus der Leitung (26) nur in die Mikrokanäle eingeleitet wird.

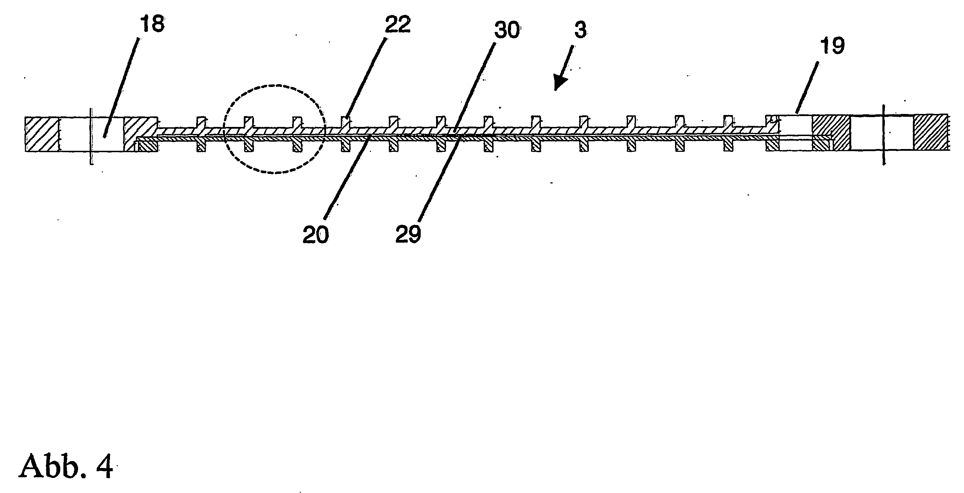

Der Querschnitt gemäß Figur 4 verdeutlicht nochmals den prinzipiellen Aufbau eines Verdampfermoduls aus zwei Platten (29, 30) mit den Hohlräumen für das Wärmeträgermedium (20), den Abstandshaltern (22), einer Verteilerleitung (19) für das flüssige Medium sowie Bohrungen (18) für Gewindebolzen zwecks Fixierung des Modulpakets.

Figur 2 zeigt eine Aufsicht auf eine Verdampferplatte (3). Die gezeigte Anordnung der Abstandshalter, welche in gewissen Abständen jeweils vertikal untereinander stehen, ist besonders zweckmäßig. In den Felder zwischen den Abstandshaltern (27) befinden sich die (nicht gezeigten) Scharen paralleler Mikrokanäle. Die Fließrichtung der Flüssigkeit in den Mikrokanälen wird durch den Pfeil (28) verdeutlicht. In der Ansicht der Figur 2 sind ferner der Heizmediumzulauf (6), der Heizmediumrücklauf (7) sowie einige Kanäle (20) für den Wärmeträger innerhalb der Platte gestrichelt eingetragen. Die Aufgabevorrichtung für das flüssige Medium umfasst die Verteilerleitung (19), die Zufuhrleitung (26) sowie das Abdeckblech (21). Angedeutet sind ferner Schweißpunkte (24) und Bohrungen (18) für die Gewindebolzen.

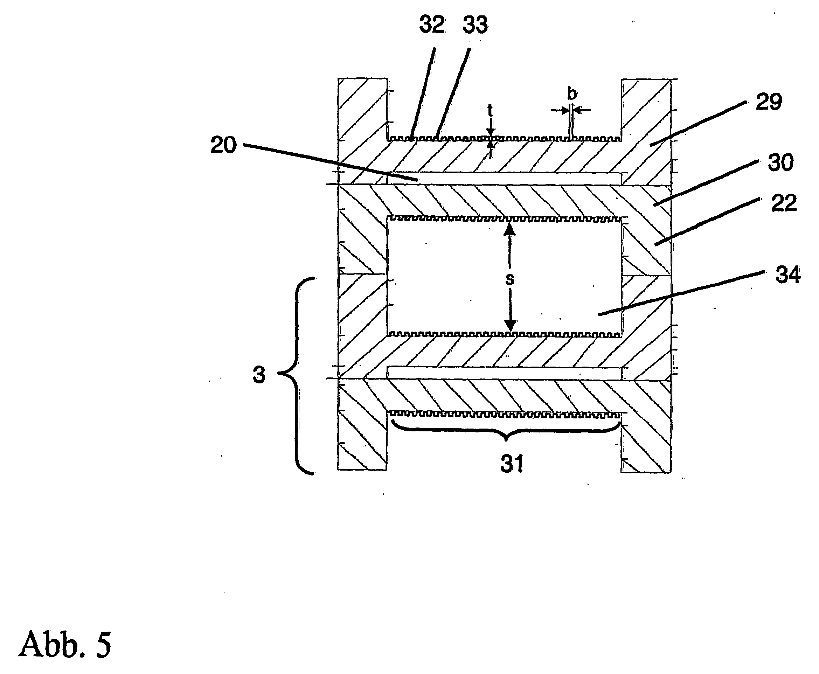

Figur 5 zeigt einen Ausschnitt aus zwei nebeneinander angeordneten Verdampfermodulen (3). Die Spaltweite (s) des zwischen zwei Verdampfermodulen gebildeten Verdampferraums wird durch die Höhe der Abstandshalter (22) bestimmt. In Figur 5 sind Scharen (31) paralleler Mikrokanäle (32), zwischen welchen sich die Stege (32, 33) befinden, erkennbar. Dargestellt sind ferner die Tiefe (t) der Mirkokanäle sowie die Breite (b) derselben. Gemäß einer bevorzugten Ausführungsform der erfindungsgemäß zu verwendenden Fallfilmverdampfer ist die Spaltweite (s), gemessen vom Boden der Mikrokanäle, größer als die Tiefe (t) derselben und kleiner als 20 mm. Vorzugsweise ist s größer 2 t, insbesondere größer 5 t und besonders bevorzugt größer 100 µm. Die Breite b der Mikrokanäle kann in weiten Grenzen liegen, zweckmäßig ist jedoch eine Breite von kleiner 2000 µm, insbesondere eine solche im Bereich von 50 bis 500 µm. Die Tiefe (t) der Mikrokanäle ist in der Regel kleiner als 1000 µm, insbesondere liegt sie im Bereich von 25 bis 500 µm. Die Breite der Stege zwischen den Mikrokanälen ist wenig kritisch, bestimmt jedoch die durchsetzbare Flüssigkeitsmenge, so dass es vorteilhaft ist, wenn die Stegbreite weniger als 1000 µm beträgt, insbesondere im Bereich von 25 bis 500 µm liegt.

Ein weiterer Gegenstand der Erfindung richtet sich auf die zur Durchführung des Verfahrens geeignete Vorrichtung gemäß den Vorrichtungsansprüche.

Gemäß einer besonders bevorzugten Ausführungsform sind die Verdampferräüme an ihren Schmalseiten verschlossen und oben und unten im wesentlichen über die gesamte Breite der Module geöffnet.

Die bevorzugte Ausführungsform eines erfindungsgemäßen Fallfilmverdampfers gemäß Figur 1 kann auch in der Weise abgeändert werden dass anstelle der in Figur 1 gezeigten Kombination aus zwei Stapel aus Modulen mit zwischenliegenden spaltförmigen Räumen ein einziges Modulpaket verwendet wird, wobei jedoch die in den Verdampfermodulen verlaufenden Hohlräume für das Wärmeträgermedium derart angeordnet werden, dass mehrere horizontal angeordnete Zonen resultieren. Jeder Zone wird ein separater Heizmediumzulauf und -ablauf zugeordnet, so dass sich über die Verdampfermodule ein stufenweises Temperaturprofil einstellen lässt.

Gemäß einer alternativen Ausführungsform eines erfindungsgemäßen Fallfilmverdampfers mit mehreren Stapeln aus Verdampfermodulen mit zugehörigen spaltförmigen Räumen zwischen diesen, befinden sich diese Stapel in einem oder mehreren Behältern seitlich versetzt übereinander. Diese Ausführungsform ist dann vorteilhaft, wenn in dem unteren Stapel aus einem flüssigen Medium eine gasförmige Phase gewonnen und diese im oberen Stapel unter Zufuhr einer zweiten Reaktionskomponente, welche gasförmig sein kann, umgesetzt wird und das Reaktionsprodukt selbst flüssig ist und somit am unteren Ende des oberen Stapels abtropft und sich nicht mit der aus dem unteren Stapel abtropfenden Flüssigkeit vereinigt. Selbstverständlich können in diesem Falle die Module ganz oder nur teilweise mit einem wirksamen Katalysator beschichtet sein. Obgleich die Verwendung von Modulen mit einer Schar paralleler Mikrökanäl ein einem zweiten Modulpaket nicht in allen Fällen erforderlich ist, ist es dennoch vorteilhaft, auch die Module des zweiten Stapels mit Scharen paralleler Mikrokanäle auszurüsten, wenn die zweite Reaktionskomponente selbst eine Flüssigkeit ist und/oder ein Katalysator in direkter Schicht zugegen sein soll.

Bei dem erfindungsgemäßen Verfahren kann es sich um eine einfache Verdampfung oder Bildung einer gasförmigen Phase durch Zersetzung handeln, oder eine Kombination der Bildung der Gasphase mit unmittelbar anschließender Umsetzung mit einer zweiten Reaktionskomponente. Bei dieser Umsetzung kann es sich um beliebige Reaktionen handeln, beispielsweise eine Oxidation, Epoxidation, Hydrierung oder Additionsreaktion. Der zweite Reaktionspartner kann gasförmig oder flüssig sein.

Vorteile der erfindungsgemäßen Vorrichtung sind:
- Einfacherer Aufbau als derjenige vörbekannter modularer Mikroreaktoren mit Mikrokanälen auf Fluidführungsplatten, indem durch oben und/oder unten offene Spalten zwischen jeweils zwei Verdampfermödulen oder zwischen einem Verdamfermödul und einer gegenüberliegenden Platte ohne Mikrokanäle kein aufwendiges Kanalsystem für die Gasabführung und/oder Gaszuführung sowie Flüssigkeitsabfuhr erforderlich ist.
- Leichte Anpassungsfähigkeit an eine gewünschte Anlagenkapazität durch den modularen Aufbau; einfaches "scale-up".
- Leichte Anpassungsfähigkeit der Vorrichtung an unterschiedliche Erfordernisse zur Weiterverarbeitung des in-situ aus einer Flüssigkeit gewonnenen Gases durch eine Kombination mit nachgeschalteten gleich oder ähnlich gebauten modularen Vorrichtungen.
- Erhöhte Sicherheit durch spaltförmige Verdampferräume und kurzzeitige thermische Belastung der zu verdampfenden Flüssigkeit sowie rasches Abkühlen in einer nachgeschalteten Zone oder Stapel einer gleichen, jedoch bei geringerer Temperatur betriebenen Vorrichtung.
- Leichter Austausch der Module, wobei letztere auf Wandflächen zusätzlich eine katalytisch wirksame Beschichtung aufweisen können. Zudem kann eine Beschichtung auch in einer Schar paralleler Mikrokanäle angeordnet sein, wodurch die für katalytische Folgereaktionen benötigte Katalysatormenge und die Haftfestigkeit des Katalysators erhöht und damit die Reaktion günstig beeinflusst werden können.
- Leichte Variation der Spaltweite der Verdampfer/Reaktiönsräume durch Veränderung der Höhe der Abstandshalter zwischen den Modulen.
- Gute Kontrollierbarkeit des Wärmeübergangs und rasche Ansprechbarkeit auf Änderungen der Beschickungsmenge; einheitliches Temperaturprofil auf den Seitenflächen der Verdampfermodule und damit Vermeidung von "Hot-spots".
- Geringer Druckverlust durch oben und/oder unten offene Spalte und eine an die gebildete Gasmenge angepasst Spaltweite.
- Verhinderung einer Flammenausbreitung durch Auswahl einer den Erfordernissen entsprechenden Spaltweite in einem der Gewinnung einer Gasphase dienenden modularen Verdampfer oder einen nachgeschalteten plattenförmigen Reaktor.
- Vielseitige Nutzbarkeit der erfindungsgemäßen Vorrichtung oder einer Kombination derselben mit gleichen oder ähnlichen modularen Reaktoren für unterschiedliche Reaktionen, wie Oxidationen und Hydrierungen, wobei das Oxidationsmittel bzw. Hydrieragens oder das zu oxidierende bzw. zu reduzierende Substrat in einer erfindungsgemäßen Vorrichtung in den für die Umsetzung benötigten gasförmigen Zustand überführt werden können. Ein bevorzugtes Beispiel für eine Oxidatiön ist eine Gasphasen-Epoxidation eines niederen Olefins, wie Ethen, Propen, 2- und 4-Buten, mit gasförmigem Wasserstoffperoxid. Beispiele für in die Gasphase zu überführende Reduktionsmittel sind Hydrazin und Hydroxylamin.

Ein Beispiel für die Verwendung der erfindungsgemäßen Vorrichtung richtet sich auf die Verdampfung einer wässrigen Wasserstoffperoxidlösung zur Gewinnung (i) einer konzentrierten wässrigen Wasserstoffperoxidlösung und (ii) einer Wasserstoffperoxid und Wasser enthaltene Dampfphase, die ihrerseits unmittelbar Folgereaktionen, wie der Epoxidation eines Olefins, wie Propylen, in der Gasphase zugeführt werden kann.

Ein weiteres Beispiel zur Anwendung des erfindungsgemäßen Verfahrens betrifft die Bereitstellung eines aus einer Flüssigkeit gewonnenen Gasstroms, zum Beispiel eines Ammoniakgasstroms aus flüssigem Ammoniak, der leicht und schnell regelbar ist und so bedarfsgerecht einer chemischen Umsetzung zugeführt werden kann. Die bedarfsgerechte Bereitstellung unter im wesentlichen konstantem Druck lässt sich im Gegensatz zu sonst üblichen Verfahren, die oft zu einem Druckverlust führen und zudem die Gefahr einer Sprudelbildung aufweisen, durch Regelung der Wärmezufuhr zu den Verdampfermodulen und/oder Steuerung der Flüssigkeitszufuhr, etwa einer Flüssigkeitszufuhr zu einer reduzierten oder erhöhten Zahl von Modulen, bewirken.

### Bezugszeichen

- 1: Fallfilmverdampfer
- 2: Stapel (aus Verdampfermodulen und spaltförmigen Verdampferräumen)
- 2': Stapel (aus Kühlmödulen und spaltförmigen Zwischenräumen)
- 3: Verdampfermodul
- 3': Kühlmodul
- 4: Endmodul
- 5: Gewindebolzen mit Mutter (Spannvorrichtung)
- 6: Heizmediumzulauf
- 7: Heizmediumrücklauf
- 8: Kühlmediumzulauf
- 9: Vorrichtung zur Gaszufuhr
- 10: Gasabzug (Gas, Dampf)
- 11: Konzentratabzug
- 12: Behälterseitenwand
- 13: Behälterboden
- 14: Behälterdeckel
- 15: Isolierung
- 16: Trennelement
- 17: Flausen
- 18: Bohrung für Gewindebolzen
- 19: Verteilerleitung (für flüssiges Medium)
- 20: Kanal für Wärmeträger
- 21: Abdeckblech (Teil der Aufgabevorrichtung)
- 22: Abstandshalter
- 23: Öffnung
- 24: Schweißpunkt
- 25: Schweißnaht
- 26: Zufuhrleitung (für flüssiges Medium)
- 27: Plattenfläche (mit Mikrokanälen)
- 28: Strömungseinrichtung (flüssiges Medium)
- 29: Platten eines Moduls
- 30: Platten eines Moduls
- 31: Schar Mikrokanäle
- 32: Mikrokanal
- 33: Steg zwischen Mikrokanälen
- 34: Verdampferraum

## Patentansprüche

1. Verfahren zur Gewinnung einer gasförmigen Phase aus einem flüssigen Medium im technischen Maßstab durch mindestens teilweises Verdampfen des flüssigen Mediums oder mindestens einer darin enthaltenen Komponente oder Freisetzen einer aus dem flüssigen Medium durch Spaltung gebildeten Komponente in einem modular aufgebauten Fallfilmverdampfer, umfassend, stapelförmig vertikal oder geneigt angeordnete plattenförmige Module, wobei mindestens jeder zweite Modul als Verdampfermodul ausgebildet ist und spaltförmige Verdampferräume zwischen einander zugekehrten Seitenflächen von im wesentlichen gleichgroßen, rechteckigen Modulen,
**dadurch gekennzeichnet,**
**dass** man einen Fallfilmverdampfer verwendet, dessen Verdampfermodule zumindest auf einer den spaltförmigen Verdampferräumen zugekehrten Seite eine Schar paralleler Mikrokanäle aufweisen, deren Orientierung der Laufrichtung des darin durch Schwerkraft und/oder Kapillarkräfte fließenden flüssigen Mediums entspricht, und dessen Verdampferräume oben und/oder unten über im wesentlichen die gesamte Breite der Module offen sind, das flüssige Medium mittels einer Aufgabevorrichtung den Mikrokanälen zuführt, die Mikrokanäle mittels eines die Verdampfermodule durchströmenden Wärmeträgermediums indirekt beheizt und die entstehende gasförmige Phase aus den oben und/oder unten offenen Verdampferräumen abzieht.

2. Verfahren nach Anspruch 1,
**dadurch gekennzeichnet,**
**dass** man einen Fallfilmverdampfer verwendet, dessen Verdampfermodule jeweils zwei im wesentlichen gleich große miteinander verbundene Platten umfassen, welche einen oder mehrere von einem Wärmeträgermedium durchströmbare Hohlräume umschließen, und deren einem Verdampferraum zugekehrte Seitenfläche eine Schar paralleler Mikrokanäle aufweisen.

3. Verfahren nach Anspruch 1 oder 2,
**dadurch gekennzeichnet,**
**dass** man einen Fallfilmverdampfer verwendet, dessen spaltförmige Verdampferräume eine Spaltweite (s), gemessen vom Böden der Mikrokanäle, im Bereich von größer als die Tiefe (t) der Mikrokanäle und kleiner als 20 mm aufweisen, dessen Mikrokanäle eine Breite (b) von weniger als 2000 µm, insbesondere eine solche im Bereich von 50 bis 500 µm und eine maximale Tiefe (t) von weniger als 1000 µm, insbesondere eine solche im Bereich von 25 bis 500 µm aufweisen und wobei die Breite der Stege zwischen den Mikrokanälen weniger als 1000 µm, insbesondere 25 bis 500 µm beträgt.

4. Verfahren nach einem der Ansprüche 1 bis 3,
**dadurch gekennzeichnet,**
**dass** man in die spaltförmigen Verdampferräume von unten oder oben ein Gas einleitet und damit die aus dem flüssigen Medium gebildete gasförmige Phase aus dem Fallfilmverdampfer austrägt.

5. Verfahren nach einem der Ansprüche 1 bis 4,
**dadurch gekennzeichnet,**
**dass** man die gebildete gasförmige Phase in den Verdampferräumen in-situ mit einem im Gleich- oder Gegenstrom zur Laufrichtung des flüssigen Mediums in die spaltförmigen Verdampferräume eingeleiteten gasförmigen Reaktionspartner in An- oder Abwesenheit einer katalytisch wirksamen Beschichtung auf mindestens einem Teil einer oder beider einen Verdampferraum begrenzenden Modulflächen weiter umsetzt.

6. Verfahren nach einem der Ansprüche 1 bis 5,
**dadurch gekennzeichnet,**
**dass** man einen Fallfilmverdampfer verwendet, der entweder mehrere Stapel aus vertikal angeordneten Modulen und dazwischen liegenden spaltförmigen Verdampferräumen und/oder mindestens einen gleichartigen Stapel, der aber mehrere horizontal angeordnete Zonen aufweist, umfasst, wobei die spaltförmigen Räume zwischen den Modulen über im wesentlichen die gesamte Breite der Module oben und unten offen sind, und dass man bei Bedarf durch die Module der einzelnen Stapel und/oder durch die einzelnen Zonen der Module Wärmeträgermedien mit unterschiedlicher Temperatur leitet.

7. Verfahren nach Anspruch 6,
**dadurch gekennzeichnet,**
**dass** man als flüssiges Medium eine Lösung einer thermolabilen Verbindung beheizten Mikrokanälen von Verdampfungsmodulen eines ersten Stapels oder einer ersten Zone eines Stapels zuführt, das herabfließende, sich konzentrierende flüssige Medium gekühlten Mikrokanälen von Modulen eines zweiten gleichartigen Stapels oder einer zweiten Zone zuführt und die gewonnene gasförmige Phase zwecks weiterer Verwertung aus den Verdampferräumen des ersten Stapels oder der ersten Zone austrägt.

8. Vorrichtung zur Durchführung des Verfahrens gemäß einem der Ansprüche 1 bis 7 im technischen Maßstab, umfassend einen modular aufgebauten Fallfilmverdampfer, enthaltend mindestens einen Stapel aus vertikal oder geneigt angeordneten plattenförmigen Modulen, wobei mindestens jeder zweite Modul als verdampfermodul ausgebildet ist, indem er einen oder mehrere von einem Wärmeträgermedium durchströmbare Hohlräume aufweist, und spaltförmigen Verdampferräumen zwischen einander zugekehrten Seitenflächen von im wesentlichen gleich großen, rechteckigen Modulen,
**dadurch gekennzeichnet, dass** die Verdampfermodule zumindest auf einer einem spaltförmigen Verdampferraum zugekehrten Seite eine Schar paralleler Mikrokanäle in einer Orientierung entsprechend der Laufrichtung eines darin durch Schwerkraft und/oder Kapillarkräfte fließenden flüssigen Mediums und eine Vorrichtung zum Zuführen eines flüssigen Mediums in die Mikrokanäle aufweisen, die spaltförmigen Verdampferräume über im wesentlichen die gesamte Breite der Module oben und/oder unten offen sind und der mindestens eine Stapel in einem mit je einer Vorrichtung zum Abziehen einer Gasphase und einer Flüssigkeitsphase ausgestatteten Behälter angeordnet ist.

9. Vorrichtung nach Anspruch 8,
**dadurch gekennzeichnet,**
**dass** die spaltförmigen Verdampferräume über im wesentlichen die gesamte Breite der Module oben und unten offen, an ihren Seiten aber geschlossen sind und durch ein zwischen der Behälterwand und dem Stapel angeordnetes Trennelement eine Rückströmung einer aus den spaltförmigen Verdampferräumen oben austretenden Gasphase in den unteren Teil des spaltförmigen Verdampferräume verhindert wird.

10. Vorrichtung nach einem der Ansprüche 7, 8 oder 9,
**dadurch gekennzeichnet,**
**dass** die Verdampfermodule zwei oder mehrere horizontale Zonen aufweisen, wobei mindestens eine Zone eine Schar paralleler Mikrökänäle aufweist und jede Zone mit separaten Vorrichtungen zur Zu- und Abfuhr eines Wärmeträgermediums ausgestattet ist.

11. Vorrichtung nach einem der Ansprüche 8 bis 10,
**dadurch gekennzeichnet,**
**dass** in einem oder mehreren kommunizierenden Behältern mindestens zwei Stapel axial oder seitlich versetzt übereinander angeordnet sind, wobei, die Verdampfermodule des unteren Stapels auf mindestens einer Seite eine Schar paralleler Mikrokanäle nebst Vorrichtung zur Zufuhr eines flüssigen Mediums aufweisen und am jeweils unteren Ende der Stapel eine Vorrichtung zum Zuführen eines Gases in die spaltförmigen Räume vorgesehen ist.

12. Verfahren nach Anspruch 6,
**dadurch gekennzeichnet,**
**dass** man einen ersten Stapel oder einer ersten Zone einer erfindungsgemäßen Vorrichtung eine wässrige Wasserstoffperoxidlösung zuführt und das aus eine Wasserstoffperoxid enthaltende Dampfphase gewinnt, diese Dampfphase mittels eines Inertgases oder eines Olefins mit 2 bis 4 C-Atomen in einem zweiten Stapel oder in eine zweite Zone eines Stapels aus plattenförmigen temperierbaren Modulen mit dazwischen liegenden Reaktionsräumen, wobei die Platten mit einem Katalystor beschichtet sein können oder sich ein Katalysatorbett in den Reaktionsräumen befindet, überführt und dort in Gegenwart eines Olefins mit 2 bis 4 C-Atome zum entsprechenden Olefinoxid umsetzt.

## Claims

1. Process for the recovery of a gaseous phase from a liquid fluid on a commercial scale by at least partial evaporation of the liquid fluid or of at least one of the components contained therein or by setting free one of the components formed by thermal transition of the liquid fluid in a modular falling-film evaporator consisting of stacked vertical or inclined plate-type modules, with at least every other module being constructed as an evaporator module, and gap-type evaporation chambers between mutually facing side surfaces of essentially equal-sized rectangular modules,
**characterised in that** a falling-film evaporator is used, the evaporator modules of which feature a set of parallel micro-channels at least on one side facing the gap-type evaporation chambers, the orientation of the micro-channels corresponding to the direction of the liquid fluid stream flowing therein by gravity and/or capillary forces and the evaporation chambers of which are open at the top and/or bottom essentially over the entire width of the module, the liquid fluid being fed to the micro-channels by a feeding device, the micro-channels being indirectly heated by a heat exchange fluid passing through the evaporator modules, and the gaseous phase formed being withdrawn from the evaporation chambers that are open at the top and/or bottom.

2. Process according to claim 1,
**characterised in that** a falling-film evaporator is used, the evaporator modules of which comprise two essentially equal-sized interconnected plates which enclose one or several spaces through which a heat exchange fluid is conveyed and which feature a set of micro-channels on a side facing the evaporation chamber.

3. Process according to claim 1 or 2,
**characterised in that** a falling-film evaporator is used, the width (s) of the gap-type evaporation chambers, as measured from the bottom of the micro-channels, ranging from the value greater than the depth (t) of the micro-channels and smaller than 20 mm, the width (b) of the micro-channels being less than 2000 µm, especially in the range from 50 µm to 500 µm, and the maximum depth (t) of the micro-channels being less than 1000 µm, especially in the range from 25 µm to 500 µm, the width of the webs between the micro-channels being less than 1000 µm, especially 25 µm to 500 µm.

4. Process according to any one of the preceding claims 1 to 3,
**characterised in that** a gas is fed to the gap-type evaporation chambers from lower or upper side, thus expelling from the falling-film evaporator the gaseous phase formed from the liquid fluid.

5. Process according to any one of the preceding claims 1 to 4,
**characterised in that** the gaseous phase formed is made to react in situ within the evaporation chambers with a gaseous reactant fed to the gap-type evaporation chambers in co-current or counter-current, with the flow direction of the liquid fluid in or without the presence of a catalytically active coating on at least part of one or both module surfaces delimiting the evaporation chamber.

6. Process according to any one of the preceding claims 1 to 5,
**characterised in that** a falling-film evaporator is used comprising either several stacks of vertically arranged modules and gap-type evaporation chambers located between them and/or at least one homologous stack which comprises several horizontally arranged zones, the gap-type chambers between the modules being open at the top and/or bottom over essentially the entire width of the modules, and that heat exchange fluids of different temperatures are conveyed through the modules of the individual stacks and/or through the individual zones of the modules as required.

7. Process according to claim 6,
**characterised in that** the liquid fluid in the form of a solution of a thermolabile compound is fed to heated micro-channels of the evaporator modules of a first stack or a first zone of a stack, the downward flowing liquid undergoing concentration and being fed to cooled micro-channels of modules of a second homologous stack or a second zone and the recovered gaseous phase being withdrawn from the evaporation chambers of the first stack or the first zone for further processing.

8. Device for implementing the process according to any one of claims 1 to 7 on a commercial scale, said device comprising a modular falling-film evaporator containing at least one stack of vertical or inclined plate-type modules, at least every other module being designed as an evaporator module in that it features one or several spaces, through which a heat exchange fluid can flow, and gap-shaped evaporation chambers between the side surfaces of essentially equal-sized rectangular modules, with the surfaces facing each other,
**characterised in that** the evaporator modules feature a set of parallel micro-channels on at least one side facing the gap-type evaporation chambers, the orientation of the micro-channels corresponding to the direction of the liquid fluid stream flowing therein by gravity and/or capillary forces, and a device for feeding a liquid fluid into the micro-channels, the gap-type evaporation chambers being open at the top and/or bottom essentially over the entire width of the module, and that at least one stack being arranged in a vessel equipped with a device for withdrawing a gas phase and a device for withdrawing a liquid phase.

9. Device according to claim 8,
**characterised in that** gap-type evaporation chambers are open at the top and bottom but closed at the sides and that a back-flow of a gaseous phase leaving the gap-type evaporation chambers at the top into the lower section of the gap-type evaporation chambers is prevented by a partitioning element arranged between the vessel wall and the stack.

10. Device according to any one of the preceding claims 7, 8 or 9,
**characterised in that** the evaporator modules comprise two or more horizontal zones, at least one zone featuring a set of parallel micro-channels and every zone being equipped with separate devices for feeding and withdrawing a heat exchange fluid.

11. Device according to any one of the preceding claims 8 to 10,
**characterised in that** at least two stacks are arranged axially or laterally off-set above each other in one or more communicating vessels, the evaporator modules of the lowermost stack featuring a set of parallel micro-channels on at least one side as well as a device for feeding a liquid fluid, and a device for feeding a gas into the gap-type chambers being arranged at the lower end of each stack.

12. Process according to claim 6,
**characterised in that** an aqueous hydrogen peroxide solution is fed to a first stack or a first zone of a device according to the invention, thus obtaining a vapour phase containing hydrogen peroxide, this vapour phase being fed with the aid of an inert gas or an olefin containing 2 to 4 C atoms to a second stack or the second zone of a stack of temperature-controlled plate-type modules with interposed reaction chambers, the plates being optionally coated with a catalyst or a catalyst bed being present in the reaction chambers, where the vapour phase is converted to a corresponding olefin oxide in the presence of an olefin with 2 to 4 C atoms.

## Revendications

1. Procédé pour la récupération d'une phase gazeuse, à partir d'un fluide liquide, à l'échelle industrielle, par évaporation au moins partielle du fluide liquide ou au moins d'un composant du dit fluide, ou bien par dégagement d'un composant formé par décomposition, à l'aide d'un évaporateur à film tombant de type modulaire, qui englobe des modules empilés à plaques et disposés en position verticale ou bien inclinée, de telle sorte que chaque deuxième module fonctionne comme module d'évaporation et que des chambres d'évaporation en forme de fente se situent entre les côtés latéraux de deux modules adjacents et rectangulaires, de la même grandeur,
**caractérisé en ce que** l'on utilise un évaporateur à film tombant, dont les modules d'évaporation sont munis d'un jeu de micro-voies parallèles sur au moins un côté qui se trouve vis-à-vis des chambres d'évaporation en forme de fonte, l'orientation des micro-voies étant conforme à la direction d'écoulement, par gravité et / ou par force capillaire, du fluide liquide, et dont les chambres d'évaporation se trouvent découvertes, par le haut et / ou par le bas, essentiellement sur toute la largeur des modules, l'alimentation des micro-voies en fluide liquide étant effectuée par un dispositif d'amenée, le chauffage indirect des micro-voies étant assuré par le fluide caloporteur qui s'écoule dans le module d'évaporation respectif, et la phase gazeuse obtenue étant évacuée des chambres d'évaporation par le côté ouvert supérieur et / ou inférieur.

2. Procédé selon la revendication 1,
**caractérisé en ce que** l'on utilise un évaporateur à film tombant dont chacun des modules d'évaporation consiste en deux plaques liées entr'elles, essentiellement de la même grandeur, qui renferment une ou plusieurs espaces creuses pénétrées par un fluide caloporteur et dont une surface latérale orientée vers une chambre d'évaporation est munie d'un jeu de micro-voies disposées en parallèle.

3. Procédé selon la revendication 1 ou 2,
**caractérisé en ce que** l'on utilise un évaporateur à film tombant, dont les chambres d'évaporation en forme de fente ont une largeur de fente (s) mesurée à partir du fond des micro-voies, qui est plus grande que la profondeur (t) des micro-voies, mais moins de 20 mm, et dont les micro-voies ont une largeur (b) de <2000 µm, en particulier dans une gamme de 50 à 500 µm, et une profondeur max. (t) de <1000 µm, en particulier dans une gamme de 25 à 500 µm, et que la largeur des nervures qui se situent entre les micro-voies est de <1000 µm, en particulier dans la gamme de 25 à 500 µm.

4. Procédé selon l'une des revendications de 1 à 3,
**caractérisé en ce que** l'on introduit un gaz dans les chambres d'évaporation en forme de fente, par le bas ou par le haut, et que la phase gazeuse obtenue à partir du fluide liquide est ainsi évacuée de l'évaporateur à film tombant.

5. Procédé selon l'une des revendications de 1 à 4,
**caractérisé en ce que** l'on procède à une conversion ultérieure de la phase gazeuse obentue dans les chambres d'évaporation, à l'aide d'un autre partenaire gazeux introduit concurremment avec ou à contre-courant de la direction d'écoulement du fluide liquide, directement dans les chambres d'évaporation, en présence ou en absence d'un catalyseur appliqué sur une partie d'une surface ou sur les deux surfaces modulaires renfermant une chambre d'évaporation.

6. Procédé selon l'une des revendications de 1 à 4,
**caractérisé en ce que** l'on utilise un évaporateur à film tommbant qui consiste en plusieurs assemblages empilés de modules verticaux, avec des chambres d'évaporation intercalées en forme de fente, et / ou -au moins- en un assemblage empilé similaire et constitué de plusieurs zones horizontales, dont les chambres intercalées en forme de fente entre les modules ont des côtés supérieurs et inférieurs découverts essentiellement sur toute la largeur modulaire, et que, selon besoin, un fluide caloporteur traverse, à des températures différentes, les modules des dits assemblages et / ou les zones individuelles des modules.

7. Procédé selon la revendication 6,
**caractérisé en ce que** l'on utilise, comme fluide liquide, une solution d'un composant thermolabile qui est introduite dans les micro-voies chauffées des modules d'évaporation d'un assemblage empilé ou d'une première zone d'un tel assemblage, et que le liquide qui s'écoule vers le bas subit une concentration et entre dans des micro-voies refroidies des modules d'un deuxième assemblage homologue ou dans une deuxième zone, et que la phase gazeuse récupérée est évacuée des chambres d'évaporation du premier assemblage empilé ou de la première zone, pour des fins d'un traitement ultérieur.

8. Dispositif pour la réalisation à l'échelle industrielle du procédé selon l'une des revendications de 1 à 7, qui englobe un évaporateur à film tombant modulaire renfermant au moins un assemblage empilé de modules à plaques disposées en position verticale ou inclinée, chaque deuxième module étant conçu comme module d'évaporation, avec une ou plusieurs espaces creuses traversées par le fluide caloporteur, et avec des chambres d'évaporation intercalées en forme de fente entre les surfaces latérales de modules essentiellement identiques et rectangulaires, le dites surfaces étant disposées vis-à-vis,
**caractérisé en ce que** les modules évaporateurs sont dotés d'un jeu de micro-voies disposées en parallèle au moins sur le côté qui se trouve vis-à-vis des chambres d'évaporation en forme de fente, l'orientation des micro-voies étant conformes à la direction d'écoulement, par gravité et / ou par force capillaire, du fluide liquide, et de plus dotés d'un dispositif pour l'alimentation en fluide liquide des micro-voies, et également dotés de chambres d'évaporation qui se trouvent découvertes, par le haut et / ou par le bas, essentiellement sur toute la largeur des modules, et que, au minimum, un assemblage empilé est montée dans un récipient avec un dispositif d'évacuation pour la phase gazeuse et un autre pour la phase liquide.

9. Dispositif selon la revendication 8,
**caractérisé en ce que** les chambres d'évaporation sont découvertes sur les côtés supérieurs et inférieurs mais fermés sur les côtés latéraux et qu'un cloison, qui est disposé entre la paroi du récipient et l'assemblage empilé, empêche un reflux par le haut, d'une phase gazeuse originaire des chambres d'évaporation en forme de fente, et l'entrée dans la partie inférieure des dites chambres d'évaporation.

10. Dispositif selon l'une des revendications 7, 8 et 9,
**caractérisé en ce que** les modules d'évaporation ont deux ou plusieurs zones horizontales, dont au moins une zone est munie d'un jeu de micro-voies disposées en parallèle, et que chaque zone est dotée de dispositifs séparés pour l'amenée et l'évacuation d'un fluide caloporteur.

11. Dispositif selon l'une des revendications de 8 à 10,
**caractérisé en ce que** un ou plusieurs récipients interconnectés donnent logement, au minimum, à deux assemblages empilés qui sont disposés en position axiale ou bien l'un sur l'autre, les modules évaporateurs de l'assemblage inférieur étant munis d'un jeu de micro-voies parallèles au moins sur un côté et d'un dispositif d'amenée pour un fluide liquide, et que l'extrémité inférieure des dits assemblages empilés est doté d'un dispositif d'amenée pour un gaz introduit dans les chambres en forme de fente.

12. Procédé selon la revendication 6,
**caractérisé en ce que** l'on introduit une solution aqueuse de peroxyde d'hydrogène dans un premier assemblage empilé ou dans une première zone d'un dispositif conforme à l'invention, pour récupérer une phase vaporeuse avec une teneur en peroxyde d'hydrogène, et que la dite phase vaporeuse est envoyée, à l'aide d'un gaz inerte ou d'une oléfine à 2 ou 4 atomes C, vers un deuxième assemblage empilé ou vers une deuxième zone qui englobe des modules à plaques tempérables, avec des chambres de réaction intercallées, les plaques étant revêtues d'un catalyseur selon besoin, ou bien le lit catalyseur se trouve dans les chambres de réaction, et que la dite phase vaporeuse subit une conversion en un oxyde d'oléfine correspondant, en présence d'une oléfine avec 2 ou 4 atomes C.
